# NOUVEAU FASCICULE DE BREVET EUROPEEN

(11) **EP 2 172 375 B2**
(45) Date de publication et mention de la décision concernant l'opposition: **07.10.2015**
(45) Mention de la délivrance du brevet: 28.12.2011
(21) Numéro de dépôt: 09171959.1
(22) Date de dépôt: 01.10.2009
(51) Int. Cl.: B60R 25/20

(54) **Module d'identification pour véhicule automobile**
Mobiles Steuerungsmodul
Mobile control module

(30) Priorité: 01.10.2008 FR 0805458
(43) Date de publication de la demande: 07.04.2010
(73) Titulaire: Valeo Comfort and Driving Assistance, 94046 Créteil Cedex (FR)
(72) Inventeur: Favier, Jean Patrick, 94042, CRETEIL (FR)
(74) Mandataire: Jacquot, Ludovic R. G.

(56) Documents cités:
- EP-A1- 1 911 639
- DE-U1- 8 514 075
- DE-U1- 9 208 072
- DE-U1-202005 015 165
- DE-U1-202007 007 434
- FR-A- 2 912 851
- JP-A- 2001 210 167
- JP-A- 2006 086 574
- US-A1- 2007 236 341
- US-A1- 20050 012 594
- US-B2- 7 248 150

## Description

La présente invention est relative à un module d'identification pour véhicule automobile.

Il est connu d'utiliser un module d'identification, également appelé « identifiant », pour commander un véhicule à distance, comme par exemple pour verrouiller/déverrouiller le véhicule.

Le document FR 2 912 851 divulgue un module d'identification. Dans ce document, le module d'identification comporte un boîtier comprenant des boutons permettant l'accès à des fonctions de base telles que le verrouillage/déverrouillage du véhicule ou l'ouverture du coffre. Le boîtier possède également des moyens d'interface permettant l'accès à d'autres fonctions, appelées fonctions de confort dans la suite de la description. Ces moyens d'interface forment par exemple un écran d'affichage de données sur l'état du véhicule, comme l'état de verrouillage, la température interne du véhicule, le niveau du réservoir de carburant ou bien les titres de morceaux de musique chargés dans le système audio du véhicule. Ces moyens d'interface peuvent être également des moyens de commande à distance d'un circuit appartenant au véhicule tel que le circuit de préchauffage du véhicule ou le dégivrage du pare-prise. L'utilisateur peut alors accéder, via le module d'identification, à une grande diversité de fonctions. Cette offre de fonctions multiplie les moyens d'interface (moyens de commande, afficheur) sur le module d'identification rendant plus difficile une reconnaissance rapide par l'utilisateur des moyens associés d'une part aux fonctions de base et des moyens associés d'autre part aux fonctions de confort.

Il existe donc un besoin d'améliorer l'ergonomie du module d'identification.

L'invention propose un module d'identification qui permet de s'affranchir au moins partiellement des inconvénients précités.

Un objet de l'invention concerne un module d'identification d'un véhicule automobile comportant un boîtier comprenant une première zone dans laquelle sont logés des moyens d'interface associés à au moins une fonction de base et une seconde zone dans laquelle sont logés des moyens d'interface associés à au moins une fonction de confort et un cache apte à coulisser sur le boîtier entre une première position où la première zone est uniquement accessible et une seconde position où la seconde zone est uniquement accessible.

Grâce au cache, on permet un accès conditionné aux fonctions de base et aux fonctions de confort. Ainsi, les fonctions de base ne sont accessibles que si la seconde zone est protégée par le cache. Inversement, les fonctions de confort ne sont accessibles que si la première zone est protégée par le cache. L'accès aux fonctions de base d'une part et aux fonctions de confort d'autre part est donc bien distingué, ce qui améliore globalement la reconnaissance des différents moyens d'interface par l'utilisateur.

Selon l'invention, la seconde zone comporte un écran tactile.

Selon l'invention, la première zone comprend au moins un bouton de verrouillage/déverrouillage du véhicule.

Dans une variante de l'invention, le module d'identification comporte une batterie rechargeable et une batterie de secours destinées à alimenter des moyens d'interface.

Dans une autre variante de l'invention, les moyens d'interface logés dans la seconde zone sont alimentés uniquement par la batterie rechargeable.

De cette manière on s'assure que les moyens d'interface associés aux fonctions de base ont une plus grande autonomie que les moyens d'interface associés aux fonctions de confort.

Dans une autre variante de l'invention, le module d'identification comporte un interrupteur pour commander l'alimentation des moyens d'interface logés dans la seconde zone.

Il est ainsi possible de désactiver simplement les moyens d'interface associés aux fonctions de confort.

Dans une autre variante de l'invention, l'interrupteur est situé sur le cache.

Dans une autre variante de l'invention, le cache comprend un corps et une plaque d'appui agencés pour recevoir des portions saillantes du boitier.

Le coulissement du cache sur le boîtier est ainsi réalisé d'une manière simple et économique.

Dans une autre variante de l'invention, le cache est réalisé dans un matériau comportant un faible coefficient de friction, tel que le polytetrafluoroéthylène.

On limite ainsi les frottements entre le cache et le boîtier.

D'autres caractéristiques et avantages de l'invention ressortiront de la description suivante, donnée à titre d'exemple, sans caractère limitatif, en regard des dessins annexés sur lesquels :
- la figure 1 a représente une vue en perspective du module d'identification selon l'invention dans lequel la première zone est accessible;
- la figure 1b représente une vue en perspective du module d'identification selon l'invention dans lequel la seconde zone est accessible;
- la figure 2a représente une vue de dessous d'un couvercle creux support d'un cache coulissant présent dans une position où il protège la seconde zone;
- la figure 2b représente une vue de dessous d'un couvercle creux support d'un cache coulissant présent dans une position où il protège la première zone;
- la figure 3 représente une vue en coupe transversale d'une partie supérieure du module d'identification suivant une ligne A-A de la figure 2a.

Dans la description qui va suivre, des éléments sensiblement identiques ou similaires seront désignés par des références identiques.

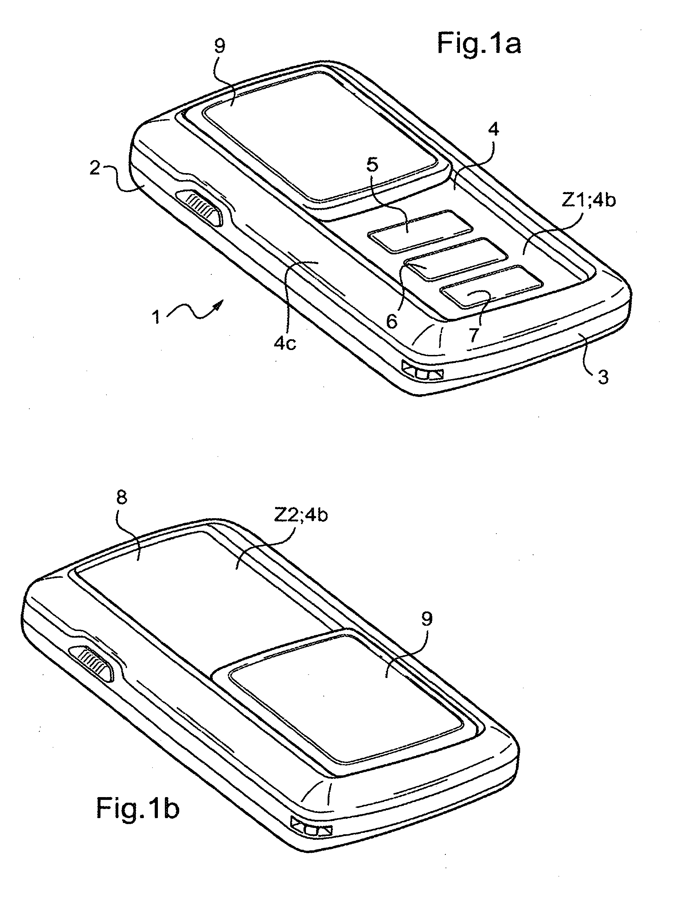

Les figures 1a et 1b sont des vues en perspective d'un module d'identification.

Le module d'identification se présente sous la forme d'une boîtier 1 comprenant une partie inférieure ou coque inférieure 2, une partie intermédiaire 3 et une partie supérieure ou coque supérieure 4.

La coque inférieure 2, la partie intermédiaire 3 et la coque supérieure 4 comprennent des moyens de clipsage (non représentés) pour assembler la coque inférieure 2 avec la partie intermédiaire 3 et des moyens de clipsage (non représentés) pour assembler la partie intermédiaire 3 avec la coque supérieure 4.

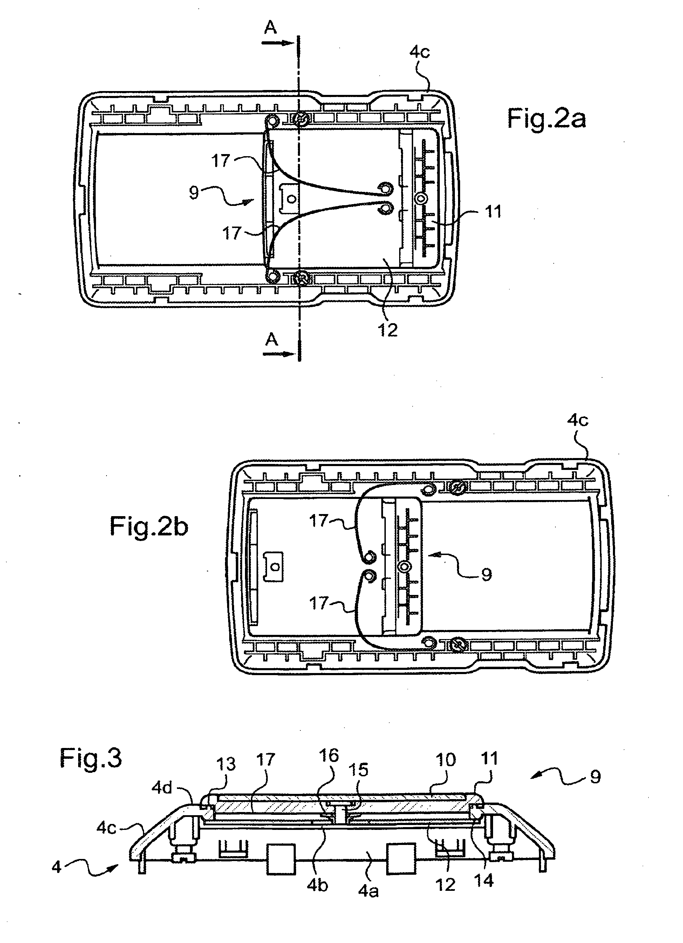

Selon la vue en coupe de la figure 3, la coque supérieure 4 comprend une embase 4a de section globalement trapézoïdale dont la partie supérieure définit une cavité 4b s'étendant longitudinalement dans le boîtier 1. La coque supérieure 4 comprend un couvercle creux 4c recouvrant partiellement l'embase 4a et dont les extrémités supérieures s'étendent vers le centre de la coque supérieure 4 pour former des portions saillantes 4d. Le couvercle creux 4c est fixé à l'embase 4a, par exemple par clipsage.

Le couvercle creux 4c est apte à supporter le cache 9 au niveau des parties saillantes 4d. Le couvercle creux 4c définit ainsi un espace intérieur permettant au cache 9 d'évoluer dans la cavité 4b de l'embase 4a. La longueur de cet espace intérieur définit l'amplitude de coulissement ou la longueur de coulissement du cache 9 sur le boîtier 1.

En référence de nouveau aux figures 1a et 1b, la cavité 4b comprend une première zone Z1 dans laquelle sont logés des moyens d'interface associés à des fonctions de base. Ces moyens d'interface sont ici sous la forme de trois boutons 5, 6, 7 placés les uns à la suite des autres dans la longueur de la cavité 4b. Bien entendu le nombre de boutons présents dans la première zone Z1 peut être supérieur ou inférieur à trois.

Chaque bouton est associé à une commande déterminée. Par exemple, le bouton 5 est un bouton de verrouillage du véhicule, le bouton 6 est un bouton de déverrouillage du véhicule et le bouton 7 est un bouton d'ouverture du coffre du véhicule.

La cavité 4b comprend également une seconde zone Z2, visible à la figure 1b, dans laquelle sont logés des moyens d'interface associés à des fonctions de confort. Ces moyens d'interface se présentent ici sous la forme d'un écran tactile 8 permettant la sélection et l'affichage de données. Les données concernent par exemple l'état de verrouillage du véhicule, la température interne du véhicule ou le niveau du réservoir de carburant.

L'écran tactile recouvre ici l'ensemble de la seconde zone Z2.

Les termes de fonction de confort et de fonction de base se définissent l'un par rapport à l'autre, c'est-à-dire qu'il existe une certaine hiérarchisation dans les fonctions. En pratique, une fonction de base est une fonction que l'on estime prioritaire et qui doit pouvoir être assurée le plus longtemps possible. A l'inverse, une fonction de confort est une fonction pour laquelle on accepte sous certaines conditions qu'elle ne soit plus assurée.

Comme il est visible aux figures 1a et 1b, un cache 9 est disposé sur la coque supérieure 4 du boîtier 1. Le cache 9 est apte à coulisser sur la coque supérieure 4 entre une première position appelée position d'ouverture, visible à la figure 1a, dans laquelle la première zone Z1 est accessible et la seconde zone Z2 n'est pas accessible et une seconde position appelée position de fermeture, visible à la figure 1b, dans laquelle la première zone Z1 n'est pas accessible et la seconde zone Z2 est accessible.

Grâce au cache 9, on permet un accès conditionné aux fonctions de base et aux fonctions de confort. Ainsi, les fonctions de base ne sont accessibles que si la seconde zone est protégée par le cache. Inversement, les fonctions de confort ne sont accessibles que si la première zone est protégée par le cache. L'accès aux fonctions de base d'une part et aux fonctions de confort d'autre part est donc bien distingué, ce qui améliore globalement la reconnaissance des différents moyens d'interface par l'utilisateur.

On notera également que les moyens d'interface des deux zones Z1, Z2 sont alimentés par une batterie rechargeable (non représentée) et une batterie de secours (non représentée) logées dans la coque inférieure 2 du boîtier 1. Afin de limiter la consommation d'énergie, les moyens d'interface 5, 6, 7, 8 ne sont plus alimentés lorsqu'ils sont protégés par le cache 9. Ainsi, lorsque la cache passe d'une position de fermeture à une position d'ouverture, l'écran tactile 8 est automatiquement éteint. De plus, afin de préserver la disponibilité des fonctions de base par rapport aux fonctions de confort la batterie de secours est strictement réservée aux moyens d'interface de la première zone Z1.

Il est en outre possible de prévoir un interrupteur pour couper l'alimentation des moyens d'interface logés dans la seconde zone Z2. Ceci est particulièrement utile lorsque le module d'identification est transporté dans un sac de l'utilisateur et que le cache 9 protège la première zone Z1. On s'assure ainsi que l'écran tactile 8 ne va pas se déclencher de manière non-désirée.

L'interrupteur est par exemple situé sur le cache 9. En variante, l'interrupteur est situé sur le couvercle creux 4c à proximité de la seconde zone Z2.

Comme il est visible à la figure 3, le cache 9 comporte une partie supérieure ou plaque de décoration 10, une partie intermédiaire ou corps du cache 11, et une partie inférieure ou plaque d'appui 12.

Le corps du cache 11 repose au niveau de ses extrémités sur deux rails externes de coulissement 13 (également visibles aux figures 2a et 2b) formés à partir de la surface externe des portions saillantes 4d de la coque supérieure 4.

La plaque d'appui 12 repose au niveau de ses extrémités sur la surface interne des portions saillantes 4d de la coque supérieure 4. La plaque d'appui 12 comprend une couche d'un matériau 14 facilitant le glissement de la plaque 12 sur la surface interne des portions saillantes 4d.

La plaque d'appui 12 est reliée au corps du cache 11 par une vis 15. La tête de la vis 15 est placée en butée contre un épaulement interne situé dans le corps du cache 11 et la vis 15 s'étend verticalement dans le corps du cache 11 jusqu'à la plaque d'appui 12. La vis 15 en reliant le corps du cache 11 avec la plaque d'appui 12 permet de maintenir le corps du cache 11 et la plaque d'appui 12 sur les surfaces respectives des portions saillantes 4d.

Une portion du corps de la vis 15 est reçue au niveau d'une zone de contact 16. La zone de contact 16 appartient à la plaque d'appui 12 et est en saillie par rapport à cette plaque d'appui 12. La zone de contact 16 vient en butée contre la partie interne du corps du cache 11 et elle crée un espace entre le corps du cache 11 et la plaque d'appui 12. L'espace ainsi créé permet de recevoir les portions saillantes 4d de la coque supérieure 4. Bien entendu, le jeu présent entre le corps du cache 11 et la plaque d'appui 12 est suffisant pour permettre un bon coulissement du cache 9, tout en maintenant correctement le corps du cache 11 et la plaque d'appui 12 sur les portions saillantes 4d. En outre, le corps du cache 11 est réalisé dans un matériau comportant un faible coefficient de friction, tel que le polytetrafluoroéthylène ou en un matériau plastique dont la constitution comprend du polytetrafluoroéthylène ce qui améliore son aptitude au coulissement.. Le corps de cache 11 est donc maintenu par son accouplement avec la plaque d'appui 12, prenant en sandwich les portions saillantes 4d. Selon une disposition avantageuse de l'invention, le corps de cache 11 comporte des pattes s'étendant en partie inférieure du corps de cache 11 et en direction des portions saillantes 4d et s'étendant sous celles-ci.

Les pattes, préférentiellement au nombre de quatre et disposées par couples, chaque couple se trouvant à une extrémité longitudinale du corps de cache 11, et de part et d'autre latéralement du corps de cache 11, servent à un placement initial avec maintien préalable du corps de cache 11 sur les parties saillantes 4d lors du montage du corps de cache 11 sur celles-ci. Après cette première étape de montage, la plaque d'appui 12, préférentiellement en métal, est assemblée au corps de cache 11 par le vissage précédemment décrit, et vient renforcer le maintien du corps de cache 11 sur les parties saillantes 4d, avec liberté de coulissement.

On notera également que la plaque de décoration 10 masque à l'utilisateur la vis 15.

En référence maintenant aux figures 2a et 2b, la coque supérieure 4 comprend également des moyens à ressort 17 bistables. Sous l'action de ces moyens à ressort 17, le cache 9 prend soit une première position stable correspondant à la position d'ouverture soit une deuxième position stable correspondant à la position de fermeture. Dans le cas où le cache 9 est stabilisé dans la première position stable, un léger déplacement du cache 9 de la première position stable entraîne automatiquement, via l'action des moyens à ressort 17, un déplacement de ce cache 9 vers la deuxième position stable.

Inversement, dans le cas où le cache 9 est stabilisé dans la deuxième position stable, un léger déplacement du cache 9 de la deuxième position stable entraîne automatiquement, via l'action des moyens à ressort 17, un déplacement de ce cache 9 vers la première position stable.

Le léger déplacement du cache 9 d'une position stable peut être généré suite à une sollicitation de l'utilisateur sur le cache 9. Les moyens à ressort 17 amplifient alors cette sollicitation et font déplacer le cache 9 dans la position stable opposée à la position stable initiale.

Les moyens à ressort 17 sollicitent alors le cache 9 pour le stabiliser dans la position d'ouverture ou dans la position de fermeture. Les moyens à ressort 17 sollicitent également le cache 9 lorsqu'il est dans une position instable (c'est-à-dire lorsque le cache 9 se situe dans une position entre la position d'ouverture et la position de fermeture) pour l'amener dans une position stable.

Les moyens à ressort 17 se présentent sous la forme de deux lames 17 agencés symétriquement par rapport à l'axe de déplacement du cache 9. Chaque lame 17 a une extrémité fixée dans la coque supérieure 4 et une extrémité fixée dans le cache 9. Les extrémités des lames 17 fixées dans la coque supérieure 4 sont situées au centre de la longueur de coulissement du cache 9, et les extrémités des lames 17 fixées dans le cache 9 sont situées au centre de la largeur du cache 9.

Lors du déplacement du cache 9, les lames 17 évoluent dans l'espace créé entre le corps du cache 11 et la plaque d'appui 12. Cet espace étant de faible hauteur, les lames 17 ont une faible épaisseur.

Dans une variante de réalisation, les moyens à ressort 17 comprennent une seule lame dont les extrémités sont fixées dans le boîtier 1 et dont le centre est fixé au cache 9.

Dans une variante de réalisation, le cache 9 est stabilisé dans la position d'ouverture par des moyens de blocage (non représentés). Ces moyens de blocage sont par exemple désactivés par une pression déterminée sur des boutons de désactivation 18 intégrés latéralement dans la partie intermédiaire 3 du boîtier 1. Ces boutons de désactivation 18 sont visibles aux figures 1a et 1 b. L'opération de fermeture est simple pour l'utilisateur qui par une pression déterminée sur les boutons de désactivation 18 déclenche automatiquement grâce aux ressorts 17 le rappel du cache vers la position de fermeture.

Lorsque les moyens de blocage sont désactivés, les ressorts 17 ramènent le cache 9 vers la position de fermeture pour protéger les moyens d'interface 5, 6, 7 logés dans la première zone.

## Revendications

1. Module d'identification d'un véhicule automobile comportant :
- un boîtier (1) comprenant une première zone (Z1) dans laquelle sont logés des moyens d'interface (5, 6, 7) associés à au moins une fonction de base comprenant au moins un bouton de verrouillage/déverrouillage du véhicule, et une seconde zone (Z2) dans laquelle sont logés des moyens d'interface (8) associés à au moins une fonction de confort comportant un écran tactile (8) ;
- un cache (9) apte à coulisser sur le boîtier (1) entre une première position où la première zone (Z1) est uniquement accessible et une seconde position où la seconde zone (Z2) est uniquement accessible.

2. Module d'identification selon l'une quelconque des revendications précédentes dans lequel le module d'identification comporte une batterie rechargeable et une batterie de secours destinées à alimenter des moyens d'interface.

3. Module d'identification selon la revendication précédente dans lequel les moyens d'interface (8) logés dans la seconde zone (Z2) sont alimentés uniquement par la batterie rechargeable.

4. Module d'identification selon l'une quelconque des revendications précédentes dans lequel ledit module comporte un interrupteur pour commander l'alimentation des moyens d'interface (8) logés dans la seconde zone (Z2).

5. Module d'identification selon la revendication précédente dans lequel l'interrupteur est situé sur le cache (9).

6. Module d'identification selon la revendication précédente dans lequel le cache (9) comprend un corps (11) et une plaque d'appui (12) agencés pour recevoir des portions saillantes (4d) du boitier (1).

7. Module d'identification selon l'une quelconque des revendications précédentes dans lequel le cache (9) est réalisé dans un matériau comportant un faible coefficient de friction, tel que le polytetrafluoroéthylène.

## Patentansprüche

1. Modul zur Identifikation eines Kraftfahrzeugs, umfassend:
- ein Gehäuse (1), das eine erste Zone (Z1), in der Schnittstellenmittel (5, 6, 7) untergebracht sind, die mindestens einer Grundfunktion zugeordnet sind, und die mindestens einen Verriegelungs-/Entriegelungsknopf des Fahrzeugs enthält, und eine zweite Zone (Z2), in der Schnittstellenmittel (8) untergebracht sind, die mindestens einer Komfortfunktion zugeordnet sind, und die einen Touchscreen (8) umfasst, enthält;
- eine Abdeckung (9), die auf dem Gehäuse (1) zwischen einer ersten Stellung, in der nur die erste Zone (Z1) zugänglich ist, und einer zweiten Stellung, in der nur die zweite Zone (Z2) zugänglich ist, gleiten kann.

2. Identifikationsmodul nach dem vorhergehenden Anspruch, wobei das Identifikationsmodul eine wiederaufladbare Batterie und eine Reservebatterie umfasst, die die Schnittstellenmittel versorgen sollen.

3. Identifikationsmodul nach dem vorhergehenden Anspruch, wobei die Schnittstellenmittel (8), die in der zweiten Zone (Z2) untergebracht sind, einzig durch die wiederaufladbare Batterie versorgt werden.

4. Identifikationsmodul nach einem der vorhergehenden Ansprüche, wobei das Modul einen Schalter zum Aktivieren der Versorgung der Schnittstellenmittel (8), die in der zweiten Zone (Z2) untergebracht sind, umfasst.

5. Identifikationsmodul nach dem vorhergehenden Anspruch, wobei der Schalter auf der Abdeckung (9) vorgesehen ist.

6. Identifikationsmodul nach dem vorhergehenden Anspruch, wobei die Abdeckung (9) einen Körper (11) und eine Stützplatte (12) enthält, die zur Aufnahme vorstehender Teile (4d) des Gehäuses (1) angeordnet sind.

7. Identifikationsmodul nach einem der vorhergehenden Ansprüche, wobei die Abdeckung (9) aus einem Material, das einen niedrigen Reibungskoeffizienten hat, wie zum Beispiel Polytetrafluorethylen, hergestellt ist.

## Claims

1. Motor vehicle identification module comprising:
- a case (1) comprising a first area (Z1) housing interface means (5, 6, 7) associated with at least one basic function and comprising at least one vehicle locking/unlocking button and a second area (Z2) housing interface means (8) associated with at least one comfort function and including a touch screen (8);
- a cover (9) that can slide on the case (1) between a first position in which only the first area (Z1) is accessible and a second position in which only the second area (Z2) is accessible.

2. Identification module according to the preceding claim, in which the identification module includes a rechargeable battery and a backup battery intended to power interface means.

3. Identification module according to the preceding claim, in which the interface means (8) housed in the second area (Z2) are powered only by the rechargeable battery.

4. Identification module according to any one of the preceding claims, in which said module includes a switch for controlling the power supply to the interface means (8) housed in the second area (Z2).

5. Identification module according to the preceding claim, in which the switch is located on the cover (9).

6. Identification module according to the preceding claim, in which the cover (9) comprises a body (11) and a backing plate (12) arranged to receive protruding portions (4d) of the case (1).

7. Identification module according to any one of the preceding claims, in which the cover (9) is made of a material having a low friction coefficient, such as polytetrafluoroethylene.
